# EUROPÄISCHE PATENTSCHRIFT

(11) **EP 0 711 379 B1**
(45) Veröffentlichungstag und Bekanntmachung des Hinweises auf die Patenterteilung: **04.06.1997**
(21) Anmeldenummer: 94923722.6
(22) Anmeldetag: 12.07.1994
(51) Int. Cl.: F01C 1/07

(54) **MITTELACHSIGE UMLAUFKOLBEN-BRENNKRAFTMASCHINE**
INTERNAL COMBUSTION ENGINE WITH PISTONS THAT ROTATE AROUND A CENTRE LINE
MOTEUR A COMBUSTION INTERNE A PISTONS TOURNANT AUTOUR D'UN AXE MEDIAN

(30) Priorität: 26.07.1993 DE 4324997
(43) Veröffentlichungstag der Anmeldung: 15.05.1996
(73) Patentinhaber: SABET, Huschang, D-70469 Stuttgart (DE)
(72) Erfinder: SABET, Huschang, D-70469 Stuttgart (DE); SPRINGER, Willi, D-73035 Göppingen (DE); ECKHARDT, Dietrich, D-73773 Aichwald (DE)
(74) Vertreter: Wolf, Eckhard, Dr.-Ing.
(86) Internationale Anmeldenummer: EP9402272
(87) Internationale Veröffentlichungsnummer: WO9503479

(56) Entgegenhaltungen:
- EP-A- 0 035 136
- FR-A- 1 027 779

## Beschreibung

Die Erfindung betrifft eine mittelachsige Umlaufkolben-Brennkraftmaschine, mit einem durch einen abtriebseitigen und einen abtriebgegenseitigen Gehäusedeckel verschlossenen kreiszylindrischen Rotorgehäuse, einem im Rotorgehäuse um dessen Mittelachse mit gleichförmiger Geschwindigkeit umlaufenden, eine abtriebseitige und eine abtriebgegenseitige Rotorseitenscheibe tragenden Außenrotor und einem im Inneren des Außenrotors um die Mittelachse mit ungleichförmiger Geschwindigkeit umlaufenden Innenrotor, wobei der Außenrotor mehrere radial nach innen weisende, starr miteinander verbundene Kolben und der Innenrotor eine entsprechende Anzahl radial nach außen weisende, zwischen je zwei Kolben des Außenrotors unter Begrenzung je zweier Arbeitskammern eingreifende, starr miteinander verbundene Gegenkolben aufweist, und wobei jeder Arbeitskammer ein Brennraum zugeordnet ist und jeder Brennraum über ein von einem Dichtring (50) umgebenes Steuerfenster abwechselnd mit stationären Ein- und Auslaßöffnungen kommuniziert.

Bei einer bekannten Brennkraftmaschine dieser Art (EP-B-0 035 136) sind die stationären Ein- und Auslaßöffnungen im Mantel des kreiszylindrischen Rotorgehäuses in Umfangsrichtung im Abstand voneinander angeordnet, während die Steuerfenster im axial mittleren Bereich des Außenrotors über dessen Umfang gleichmäßig verteilt angeordnet und als sich radial nach innen verengende, symmetrisch zur axialen Mittelebene der Kolben angeordnete Aussparungen ausgebildet sind, die in durch randoffene Aussparungen der Kolben begrenzte muldenförmige Brennräume übergehen. Versuche mit Brennkraftmaschinen dieser Art ergaben häufig von Motor zu Motor unterschiedliche Leistungen und Verbräuche, die vermutlich auf wechselhaftes Reib- und Dichtverhalten der auf der Zylinderlaufbahn eingreifenden Dichtringe zurückzuführen sind. Außerdem ist die unverzichtbare Anordnung einer Dichtung zwischen den Steuerfenstern der Rotorseitenscheibe zur Abdichtung der Aus- und Einlaßöffnungen zum Ölraum und gegeneinander wegen der zylindrischen Fläche von der Bearbeitung her aufwendig. Weiterhin führen die am Umfang des Rotorgehäuses sitzenden Auspuff- und Saugrohre zu einer relativ großen Stirnfläche des Motors.

Ausgehend hiervon liegt der Erfindung die Aufgabe zugrunde, eine Umlaufkolben-Brennkraftmaschine zu entwickeln, die einen verbesserten Hochdruckbetrieb mit geringeren Reib- und Ladungsverlusten und ein einfacher zu bearbeitendes Dichtsystem ermöglicht sowie eine Reduzierung der Stirnfläche ergibt.

Ferner zeigt die FR-A-1 027 779 eine mittelachsige Umlaufkolben-Brennkraftmaschine mit im wesentlichen axialer Be- und Ausladung. Die Dichtflächen im Bereich der Ein-und Auslaßöffnungen und der Steueröffnungen sind dort jedoch nicht eben, sondern kegelförmig ausgebildet, so daß bei der Abdichtung ähnliche Probleme wie bei der EP-A-0 035 136 auftreten dürften.

Zur Lösung dieser Aufgabe werden die im Patentanspruch 1 angegebenen Merkmale vorgeschlagen. Weitere vorteilhafte Ausgestaltungen und Weiterbildungen der Erfindung ergeben sich aus den Unteransprüchen.

Die Erfindung geht von dem Gedanken aus, daß bei einer Vereinfachung der gegeneinander abzudichtenden Kontaktflächen zwischen Rotor und Gehäuse durch die Anwendung des Dichtsystems in einer ebenen Fläche eine höhere Zuverlässigkeit im Hochdruckbetrieb erzielt werden kann. Um dies zu erreichen, wird gemäß der Erfindung vorgeschlagen, daß die stationären Ein- und Auslaßöffnungen im gegenseitigen Abstand voneinander auf einem Inkreis eines der Gehäusedeckel und die Steuerfenster in der dem betreffenden Gehäusedeckel zugewandten Rotorseitenscheibe angeordnet sind, und daß die Brennräume durch axial in Richtung Steuerfenster offene und quer dazu mit den benachbarten Arbeitskammern kommunizierende Ausnehmungen in den Außenrotorkolben gebildet sind.

Eine bevorzugte Ausgestaltung der Erfindung sieht vor, daß die Ein- und Auslaßöffnungen im abtriebgegenseitigen Gehäusedeckel und die Steuerfenster in der abtriebgegenseitigen Rotorseitenscheibe angeordnet sind. Mit dieser Maßnahme wird genügend Bauraum für die Unterbringung der den Ladungswechsel und gegebenenfalls die Zündung bewirkenden Aggregate geschaffen. Eine weitere Verbesserung in dieser Hinsicht wird dadurch erreicht, daß ein Getrieberaum zur Unterbringung des Triebwerks nicht wie bisher auf der Abtriebgegenseite und Abtriebseite, sondern nur auf der Abtriebseite des Rotorgehäuses angeordnet ist.

Die Steuerfenster können entweder einen kreisförmigen oder einen in Umfangsrichtung des Inkreises langgestreckt ovalen Umriß aufweisen. Dementsprechend sind die Brennräume zweckmäßig durch einen im wesentlichen kreiszylindrischen oder ovalzylindrischen Hohlraum mit zur Seite der benachbarten Arbeitskammer über die gesamte Brennraumhöhe randoffener Mantelfläche gebildet. Um einen zerklüftungsfreien Anschluß an das Steuerfenster zu gewährleisten, ist es vorteilhaft, wenn die Gegenkolben an ihren den Kolben zugewandten Flanken eine sich mit dem benachbarten Brennraum ergänzende randoffene Ausnehmung aufweisen. Vorteilhafterweise erstrecken sich die Brennräume über einen Bruchteil vorzugsweise von 1/4 bis 3/4 der axialen Außenrotor-Abmessung. Zur Optimierung der Brennraumabmessungen können die Kolben im Bereich der Brennraum-Mantelöffnungen konvex gekrümmte und die Gegenkolben entsprechend konkav gekrümmte Flanken aufweisen.

Zur Optimierung des Ladungswechsel ist es außerdem von Vorteil, wenn die stationären Ein- und/oder Auslaßöffnungen einen in Umfangsrichtung des betreffenden Inkreises langgestreckten ovalen Umriß aufweisen, wobei zur Vermeidung von Überströmungsverlusten die langgestreckten Auslaßöffnungen in Umfangsrichtung des betreffenden Inkreises unter Bildung eines Vorauslasses und eines Hauptauslasses in zwei gegeneinander abgedichtete, und mit verschiedenen Auslaßkanälen verbundene Bereiche unterteilt sein können.

Um eine zuverlässige und reibungsarme Abdichtung zwischen den einzelnen Steuerfenstern als solchen und zwischen den stationären Ein- und Auslaßöffnungen zu erzielen, wird gemäß der Erfindung vorgeschlagen, daß auf der dem zugehörigen Gehäusedeckel zugewandten Seite der mit den Steuerfenstern versehene Rotorseitenscheibe die Steueröffnungen umgebende sowie im Bereich zwischen den Steueröffnungen die Ein- und Auslaßöffnungen radial nach innen und nach außen begrenzende, den Spaltraum zwischen Rotorseitenscheibe und Gehäusedeckel axial überbrückende Dichtleisten angeordnet sind. Wichtig ist dabei, daß im Bereich zwischen den Steueröffnungen mindestens eine die radial innen und außen liegenden Dichtleisten verbindende, im wesentlichen radial ausgerichtete Dichtleiste vorgesehen ist, die Überströmverluste zwischen einander benachbarten Ein- und Auslaßöffnungen vermeidet. Der betreffende Gehäusedeckel besteht aus Gewichtsgründen vorteilhafterweise aus einem Leichtmetall, vorzugsweise einer Aluminiumlegierung, und trägt zumindest im Bereich der gegen ihn anliegenden Dichtleisten eine Hartstoffbeschichtung vorzugsweise aus Nikasil (Nickel mit Siliziumkarbideinlagerung).

Die erfindungsgemäße Umlaufkolben-Brennkraftmaschine kann entweder als Dieselmotor oder als Benzinmotor betrieben werden. Im ersteren Falle kann im Bereich zwischen einer jeden Einlaßöffnung und Auslaßöffnung des betreffenden Gehäusedeckels eine in Richtung Rotorseitenscheibe ausgerichtete Einspritzdüse für Kraftstoff angeordnet werden. Im letzteren Falle ist im Bereich zwischen einer jeden Ein- und Auslaßöffnung des Gehäusedeckels oder im Bereich der Steuerfenster des Außenrotors je eine Zündkerze angeordnet, die synchron mit der Motorumdrehung angesteuert wird.

Die Einspritzdüse für Dieselkraftstoff kann entweder als achsparallel montierte Zapfendüse oder als achsparallel oder schräg montierte Lochdüse ausgebildet sein. Für hohe Einspritzdrücke kann auch eine als Pumpedüse ausgebildete Einspritzdüse vorgesehen werden, die vorzugsweise über eine mit dem Außenrotor umlaufende Nockenscheibe, einen Rollenstößel und einen Kipphebel angesteuert wird.

Im folgenden wird die Erfindung anhand eines in der Zeichnung in schematischer Weise dargestellten Ausführungsbeispiels näher erläutert. Es zeigen
- Fig. 1: einen Achsenlängsschnitt durch eine Umlaufkolben-Brennkraftmaschine insbesondere für Dieselkraftstoff;

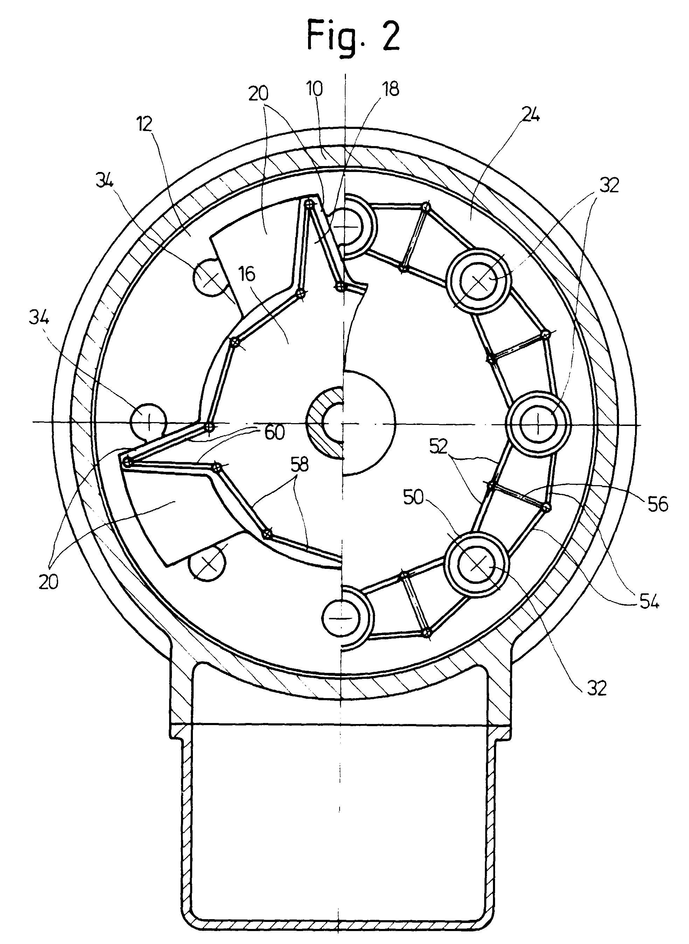

- Fig. 2: einen senkrechten Schnitt entlang der Schnittlinien A-A (links) und B-B (rechts) der Fig. 1;
- Fig. 3: einen senkrechten Schnitt durch den Außenrotor und den Innenrotor in vergrößerter Darstellung;
- Fig. 4: einen Schnitt entsprechend Fig. 3 mit sich in den Innenrotor erstreckenden Brennräumen;
- Fig. 5: einen Schnitt entsprechend Fig. 3 mit ovalen Brennräumen;
- Fig. 6: einen Schnitt entsprechend Fig. 3 mit gebogenen Kolben- und Gegenkolbenflanken;
- Fig. 7: einen vergrößerten Ausschnitt aus Fig. 1 mit achsparalleler Einspritzdüse;
- Fig. 8: eine Darstellung entsprechend Fig. 7 mit schräg angeordneter Einspritzdüse;

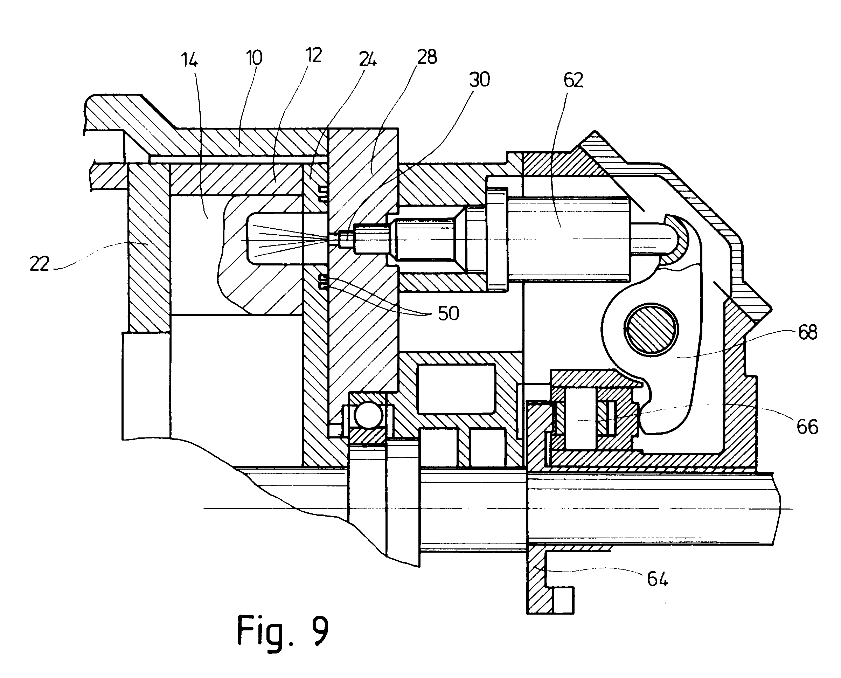

- Fig. 9: eine Schnittdarstellung entsprechend Fig. 7 mit durch eine Nockenscheibe angetriebener Pumpedüse;
- Fig. 10a: einen Querschnitt durch den Brennraum in verschiedenen Positionen relativ zur Einspritzdüse in der Nähe des oberen Totpunkts des Gegenkolbens;
- Fig. 10b: einen Schnitt entlang der Schnittlinie X-X der Fig. 10a;
- Fig. 11: eine ausschnittsweise Draufsicht der abtriebgegenseitigen Rotorseitenscheibe mit Steuerfenstern und Dichtleisten;
- Fig. 12: eine ausschnittsweise Draufsicht des abtriebgegenseitigen Gehäusedeckels mit Ein- und Auslaßöffnungen.

Die Umlaufkolben-Brennkraftmaschine besteht im wesentlichen aus einem Rotorgehäuse 10, aus einem Außenrotor 12, der vier in gleichen Winkelabständen voneinander angeordnete, radial nach innen überstehende Kolben 14 aufweist, und aus einem innerhalb des Außenrotors 12 drehbar gelagerten, mit ungleichförmiger Geschwindigkeit umlaufenden Innenrotor 16, der mit vier radial nach außen abstehenden flügelartigen Gegenkolben 18 in die Zwischenräume zwischen jeweils zwei der Kolben 14 des Außenrotors 20 eingreift. Im gegenseitigen Eingriffsbereich der Kolben 14 und der Gegenkolben 18 werden insgesamt acht Arbeitskammern 20 gebildet, deren Volumen durch das Hin- und Herschwingen der Gegenkolben 18 periodisch verkleinert und vergrößert wird. Stirnseitig sind die Arbeitskammern 20 durch mit dem Außenrotor drehfest verbundene Rotorseitenscheiben 22,24 begrenzt, während das Rotorgehäuse 10 durch stirnseitige Gehäusedeckel 26,28 abgeschlossen ist.

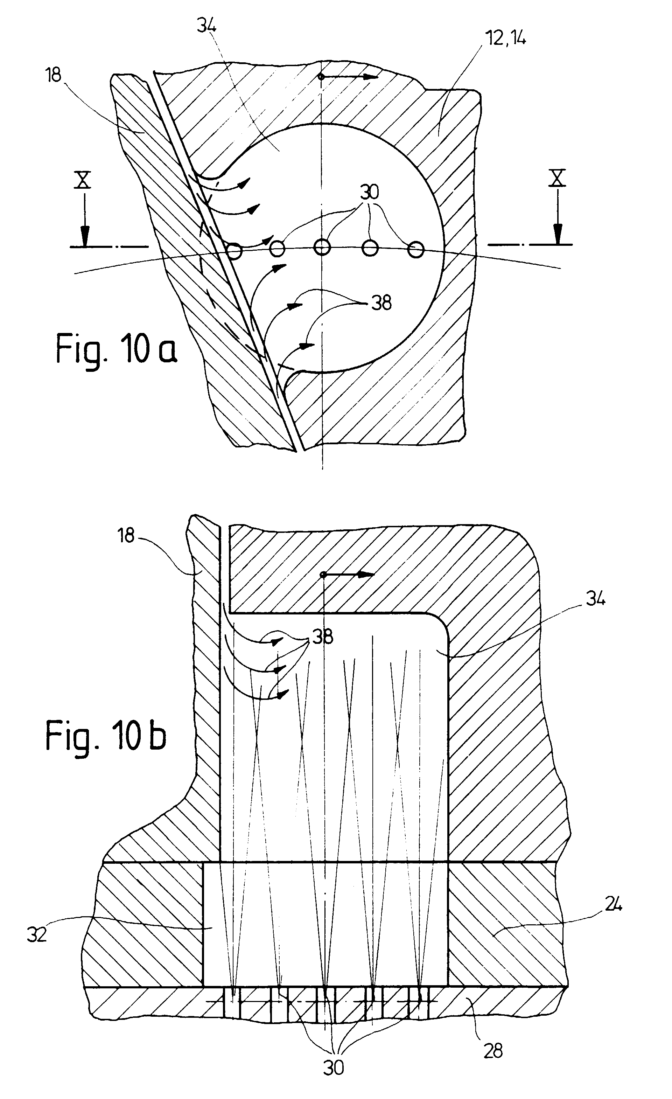

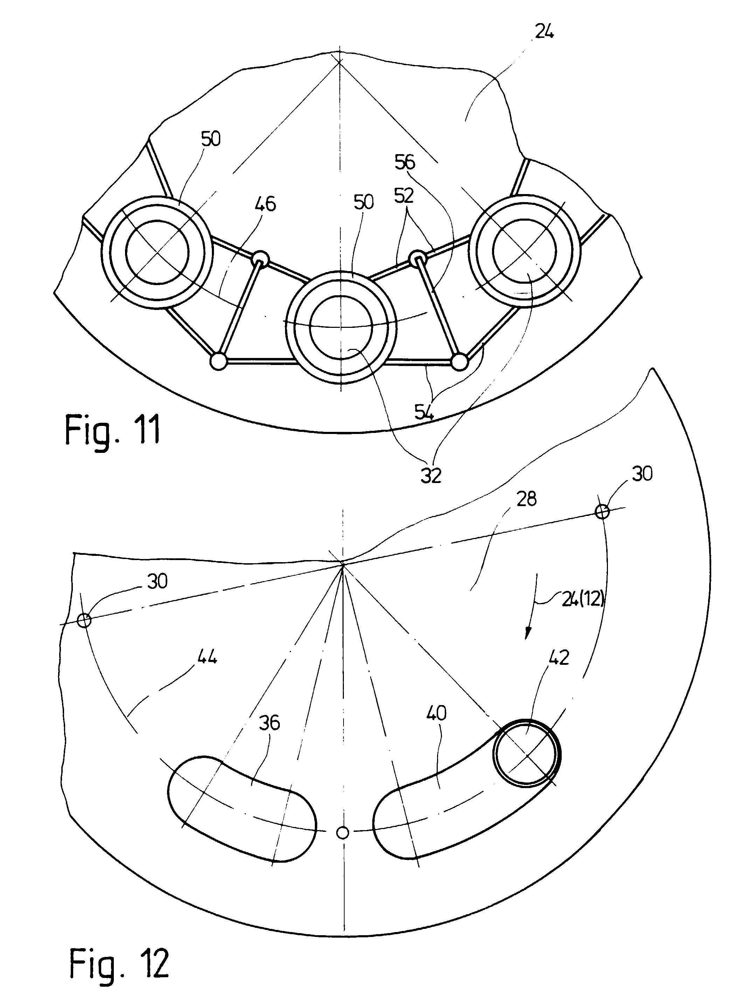

Bei den in der Zeichnung dargestellten Ausführungsbeispielen handelt es sich um Dieselmotoren, bei denen die Kraftstoffzufuhr über zwei in gleichem Abstand voneinander angeordnete Einspritzdüsen 30 im abtriebgegenseitigen Gehäusedeckel 28 erfolgt. Der Kraftstoff wird durch die stationären Einspritzdüsen 30 über insgesamt acht Steuerfenster 32 in der abtriebgegenseitigen Rotorscheibe 24 in eine entsprechende Anzahl Brennkammern 34 im vorbeilaufenden Außenrotor 12 eingespritzt, nachdem zuvor Frischluft über Einlaßöffnungen 36 und die Steuerfenster 32 in die zugehörigen Arbeitskammern 20 angesaugt und durch den Gegenkolben 18 in der oetreffenden Brennkammer 34 auf Zündtemperatur komprimiert wurde. Wie aus Fig. 10a und b in einer schematischen Darstellung zu ersehen ist, erfolgt die Zündung in der Nähe des oberen Totpunkts des Gegenkolbens 18 beim Vorbeilaufen des Außenrotors 12 an der Einspritzdüse 30 über eine Strecke von etwa 2° vor bis 6° nach dem oberen Totpunkt, so daß aufgrund der räumlichen Verschiebung der Brennkammer 34 gegenüber der Einspritzstelle 30 eine gute Durchmischung des Kraftstoffs mit der komprimierten Luft in der Brennkammer erfolgt. Einen weiteren Beitrag zur guten Durchmischung liefert die aus dem vor dem Totpunkt enger werdenden Spalt zwischen dem Kolben 14 und dem Gegenkolben 18 in den Brennraum 34 einströmende Quetschluft 38. Die nach der Zündung expandierenden Verbrennungsgase treiben die Kolben 14 und die Gegenkolben 18 auseinander und entweichen anschließend über das Steuerfenster 32 in die langgestreckte Auslaßöffnung 40, in der zur Vermeidung einer Überströmung von Abgas in die benachbarte Einlaßöffnung 36 ein abgedichteter Vorauslaß 42 integriert ist. Die Auslaßöffnungen 40 sind zusammen mit den Einlaßöffnungen 36 und den Einspritzdüsen 30 auf einem gemeinsamen Inkreis 44 des abtriebgegenseitigen Gehäusedeckels 28 angeordnet. Durch den Pfeil 24 (12) ist in Fig. 12 die Drehrichtung der Seitenscheibe 24 des Außerrotors 12 angedeutet.

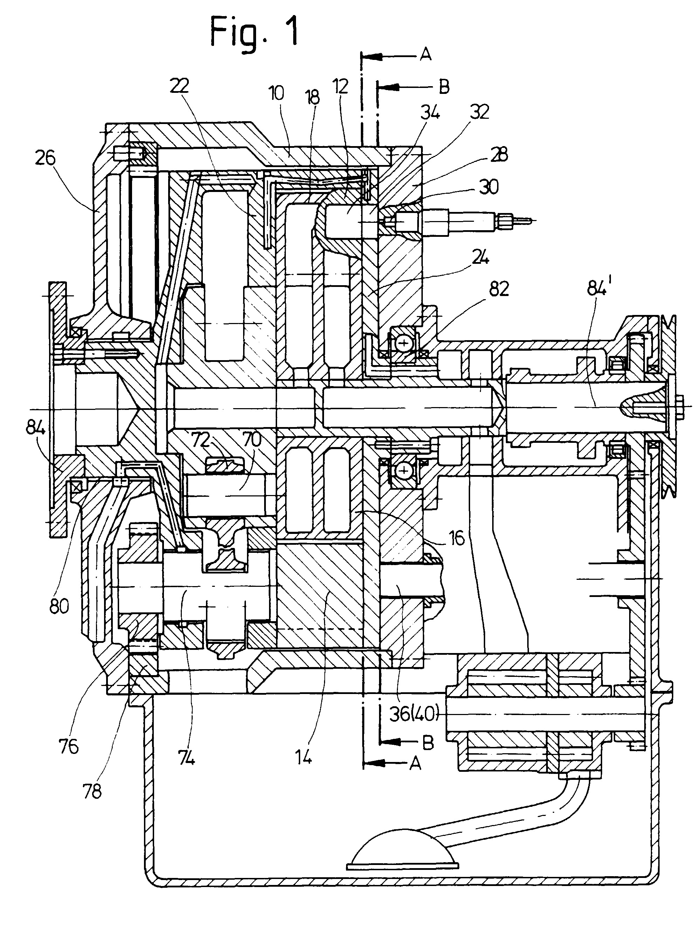

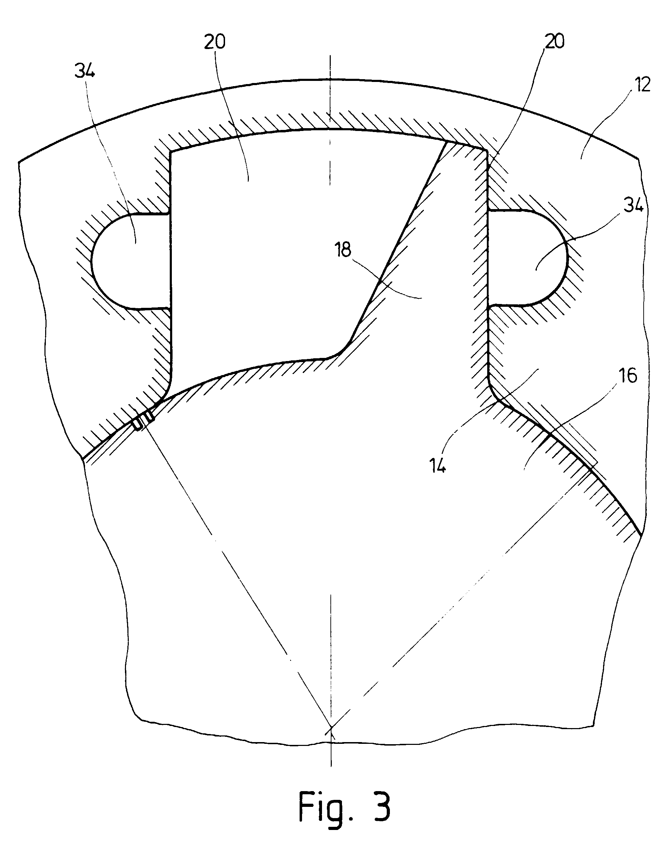

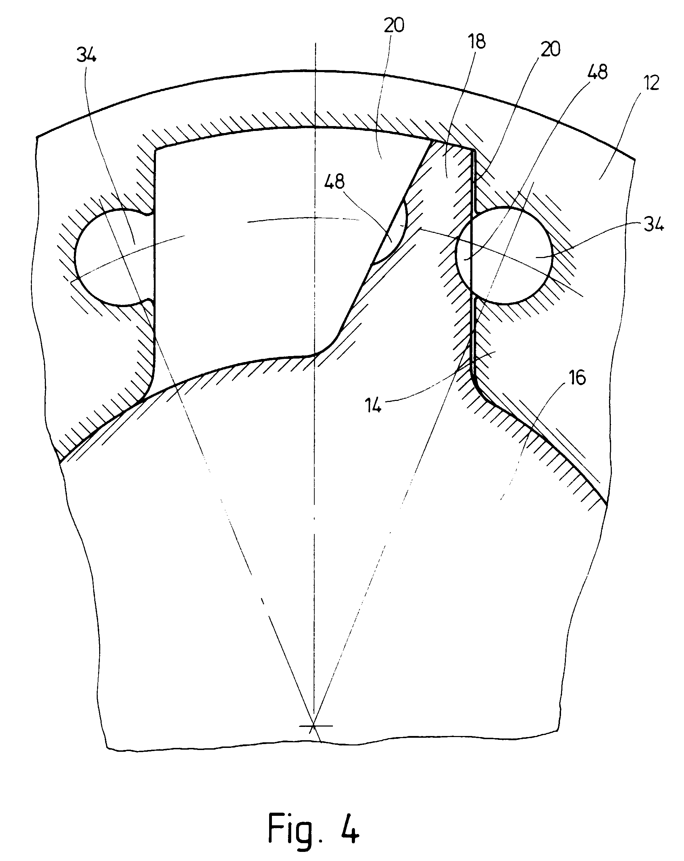

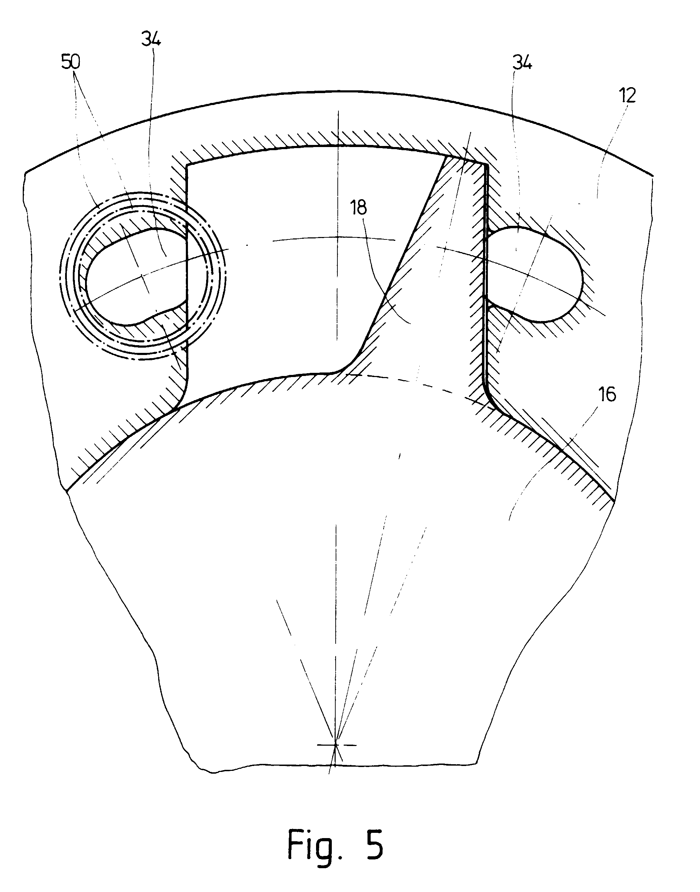

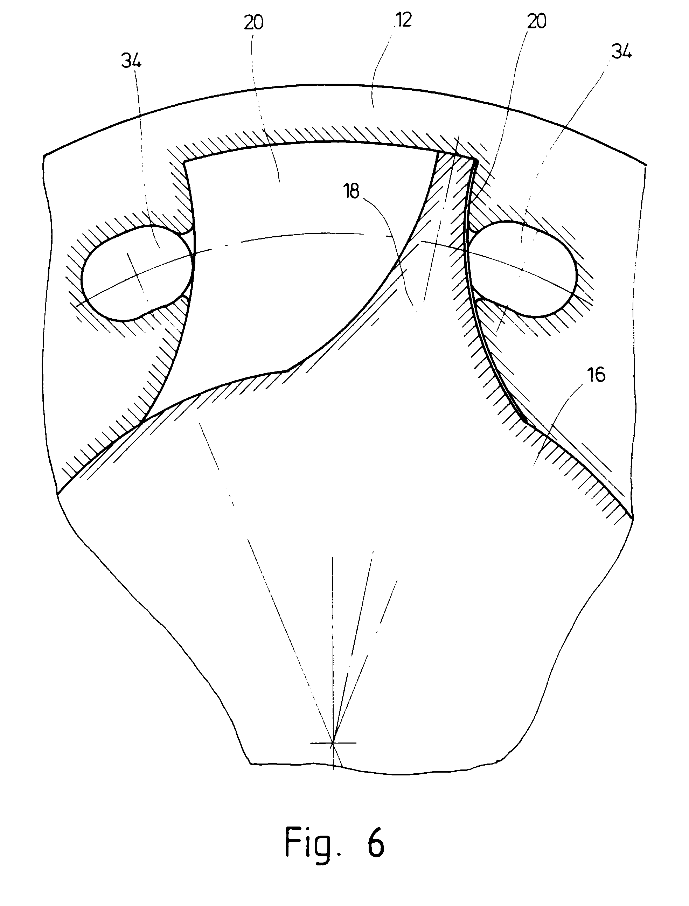

Die Steuerfenster 32 können entweder kreisförmig (Fig. 3 und 4) oder in Richtung des Inkreises 46 auf der Rotorscheibe 24 langgestreckt oval (Fig. 5 und 6) ausgebildet sein. Dementsprechend sind die Brennkammern 34 entweder kreiszylindrisch (Fig. 3 und 4) oder ovalzylindrisch (Fig. 5 und 6) ausgebildet. Die Brennkammern 34 sind jeweils paarweise achsparallel in den Kolben 14 so angeordnet, daß sie auf der Seite der Kolbenflanken zur benachbarten Arbeitskammer 20 hin randoffen sind. Wie aus Fig. 1 zu ersehen ist, erstrecken sie sich nur über einen Teil der axialen Abmessung des Außenrotors 12. Im Falle des in Fig. 4 gezeigten Ausführungsbeispiels weisen die Gegenkolben 18 an ihren Flanken auf der Höhe der Brennkammern 34 teilzylindrische Ausnehmungen 48 auf, die sich mit den Brennkammern 34 im Kolben 14 zu einem Vollzylinder ergänzen.

Bei dem Ausführungsbeispiel nach Fig. 6 weisen die Kolben 14 und die Gegenkolben 18 zueinander komplementär konvex bzw. konkav gewölbte Flanken auf, die eine erwünschte Ausstülpung der Brennräume 34 in Flankennähe ergeben.

Um die Arbeitskammern 20 und die zugehörigen Brennkammern 34 gegeneinander und gegenüber dem Gehäusedeckel 28 abzudichten, sind an der Außenseite der abtriebgegenseitigen Rotorseitenscheibe 24 Dichtleisten 50,52, 54,56 in zugehörigen Nuten angeordnet, die den Spalt zum benachbarten abtriebgegenseitigen Gehäusedeckel 28 überbrücken. Die ringförmigen Dichtleisten 50 sind dabei jeweils konzentrisch zu einem der Steuerfenster 32 angeordnet, während die geraden Dichtleisten 52 und 54 die einander benachbarten Dichtringe 50 auf einer radial innen und einer radial außen liegenden Linie miteinander verbinden und dadurch einen nach außen und nach innen abgeschlossenen Dichtungsbereich für die Ein- und Auslaßöffnungen 36,40 begrenzen. Eine mittig zwischen den Dichtringen 50 angeordnete, radial ausgerichtete Dichtleiste 56 sorgt dafür, daß eine Überströmung zwischen den einander benachbarten Aus- und Einlaßöffnungen 40,36 vermieden wird. Statt der aus mehreren Einzelleisten zusammengesetzten Dichtungen 52,54 können vor allem bei kleinen Motoren auch einstückige Dichtringe verwendet werden, die mit weniger Knotenstellen auskommen.

Auch der Innenrotor weist an seinen den Rotorscheiben 22 und 24 zugewandten Flächen einen aus Dichtleisten 58,60 polygonartig zusammengesetzten Dichtring auf, der im Bereich der spitzwinklig zusammenlaufenden Dichtleisten 60 eine Kolbenschmierung bis zur Gegenkolbenspitze ermöglicht. Zur Verbesserung der Dichtwirkung können auch zwei oder mehr parallel nebeneinander verlaufende Dichtleistenzüge vorgesehen werden.

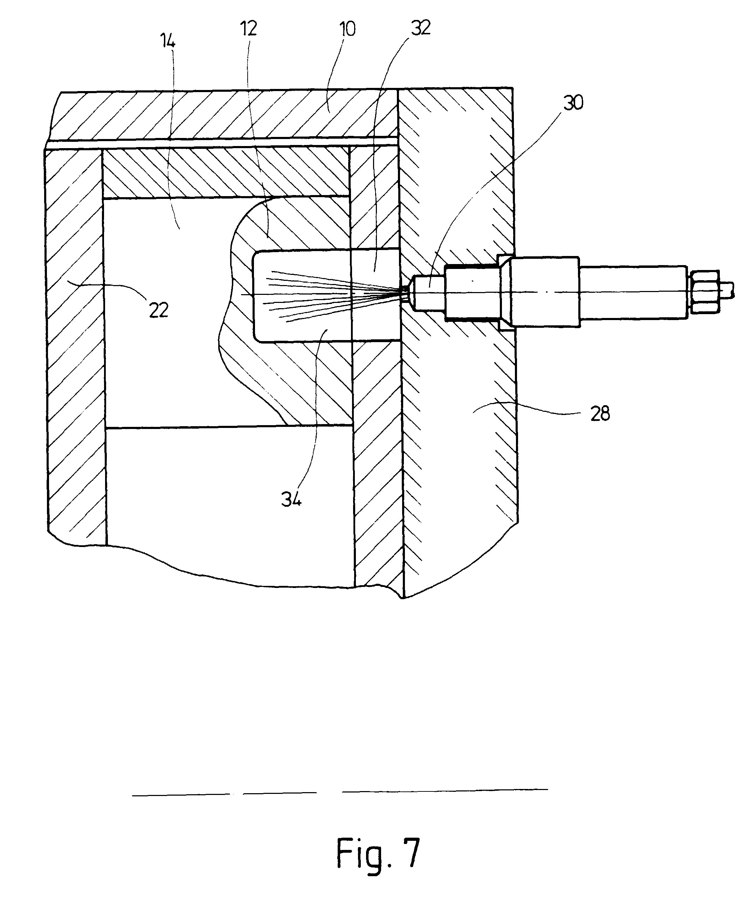

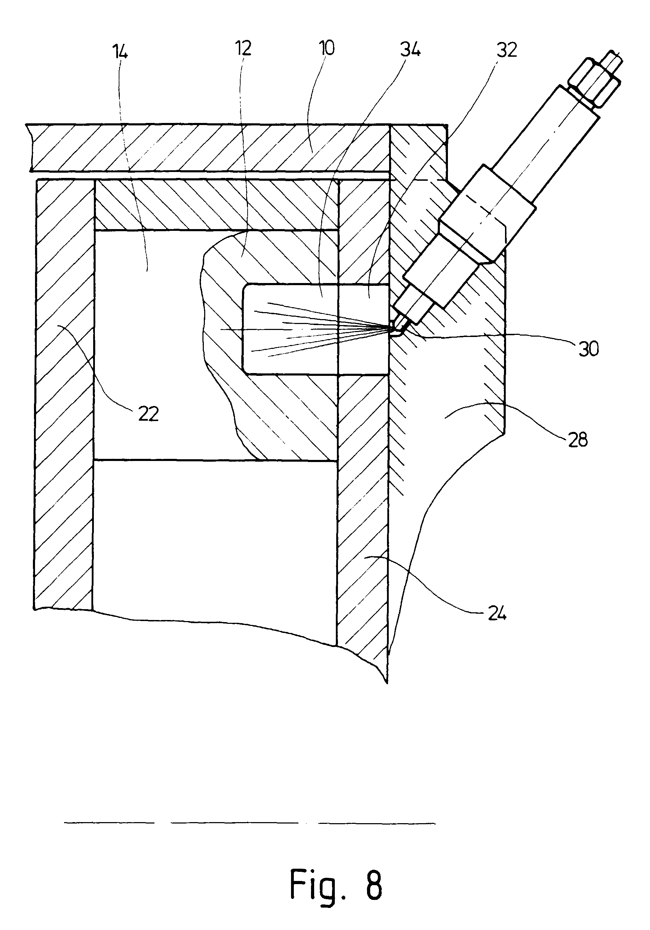

Die Einspritzdüsen können entweder als achsparallel ausgerichtete Zapfen- oder Lochdüsen (Fig. 1 und 7) oder als schräg im Gehäusedeckel angeordnete Lochdüsen (Fig. 8) ausgebildet sein. Zur Erhöhung des Einspritzdruckes können auch Pumpedüsen 62 vorgesehen werden, die über eine über die Motorwelle 84' angetriebene Nockenscheibe 64, einen Rollenstößel 66 und einen Kipphebel 68 betätigbar sind.

Die Relativbewegung zwischen dem Innenrotor 16 und dem Außenrotor 12 wird mit Hilfe von vier an Bolzen 70 des Innenrotors 16 angelenkten Pleuelstangen 72 auf die vier Kurbelwellen 74 übertragen und in eine Drehbewegung umgesetzt. Stirnseitig mit den Kurbelwellen 74 verbundene Zahnräder 76 kämmen mit den Zähnen eines innenverzahnten, elastisch mit dem abtriebseitigen Gehäusedeckel 26 verbundenen Hohlrads 78 und überführen dadurch die Drehbewegung der Kurbelwellen 74 in eine Drehbewegung des Außenrotors 12 gegenüber dem Rotorgehäuse 10. Die Rotordrehung kann mittels einer einstückig mit der abtriebseitigen Rotorseitenscheibe 22 verbundenen, und in den Lagern 80,82 der Gehäusedeckel 26,28 gelagerten Abtriebswelle 84,84' auf einen Verbraucher übertragen werden.

Zusammenfassend ist folgendes festzustellen: Es wird eine nach dem Katz- und Maus-Prinzip arbeitende Umlaufkolben-Brennkraftmaschine vorgeschlagen, bei der der Ladungsaustausch axial über einen der Gehäusedeckel 28 und die benachbarte Rotorseitenscheibe 24 erfolgt. Die Brennräume 34 sind durch axial offene und quer dazu mit den benachbarten Arbeitskammern 20 kommunizierende Ausnehmungen in den Kolben 24 des Außenrotors 12 gebildet. Die Kraftstoffzufuhr erfolgt beim Dieselmotor über Einspritzdüsen 30, die im betreffenden Gehäusedeckel 28 in Richtung Rotorseitenscheibe 24 ausgerichtet sind.

## Patentansprüche

1. Mittelachsige Umlaufkolben-Brennkraftmaschine, mit einem durch einen abtriebseitigen und einen abtriebgegenseitigen Gehäusedeckel (26,28) verschlossenen kreiszylindrischen Rotorgehäuse (10), einem im Rotorgehäuse (10) um dessen Mittelachse mit gleichförmiger Geschwindigkeit umlaufenden, eine abtriebseitige und eine abtriebgegenseitige Rotorseitenscheibe (22,24) tragenden Außenrotor (12) und einem im Inneren des Außenrotors (12) um die Mittelachse mit ungleichförmiger Geschwindigkeit umlaufenden Innenrotor (16), wobei der Außenrotor (12) mehrere radial nach innen weisende, starr miteinander verbundene Kolben (14) und der Innenrotor (16) eine entsprechende Anzahl radial nach außen weisende, zwischen je zwei Kolben (14) des Außenrotors (12) unter Begrenzung je zweier Arbeitskammern (20) eingreifende, starr miteinander verbundene Gegenkolben (18) aufweist, und wobei jeder Arbeitskammer (20) ein Brennraum (34) zugeordnet ist und jeder Brennraum (34) über ein von einem Dichtring (50) umgebenes Steuerfenster (32) abwechselnd mit stationären Ein- und Auslaßöffnungen (36,40) kommuniziert, **dadurch gekennzeichnet,** daß die stationären Ein- und Auslaßöffnungen (36,40) in gegenseitigem Abstand voneinander auf einem Inkreis (44) eines der Gehäusedeckel (28) und die Steuerfenster (32) auf einem Inkreis (46) mit entsprechendem Radius in der dem betreffenden Gehäusedeckel (28) unter Bildung einer durch ebene Flächen begrenzten Spaltraums zugewandten Rotorseitenscheibe (24) angeordnet sind, daß auf der dem betreffenden Gehäusedeckel (28) zugewandten Seite der mit den Steuerfenstern (32) versehenen Rotorseitenscheibe (24) die Steuerfenster (32) umgebende sowie im Bereich zwischen den Steuerfenstern (32) die stationären Ein- und Auslaßöffnungen (36,40) radial nach innen und nach außen begrenzende, den Spaltraum zwischen Rotorseitenscheibe (24) und Gehäusedeckel (28) axial überbrückende Dichtleisten (50, 52,54) angeordnet sind und daß die Brennräume (34) durch axial in Richtung Steuerfenster (32) offene und quer dazu mit den benachbarten Arbeitskammern (20) kommunizierende Ausnehmungen in den Kolben (14) des Außenrotors (12) gebildet sind.

2. Brennkraftmaschine nach Anspruch 1, **dadurch gekennzeichnet,** daß die Ein- und Auslaßöffnungen (36,40) im abtriebgegenseitigen Gehäusedeckel (28) und die Steuerfenster (32) in der abtriebgegenseitigen Rotorseitenscheibe (24) angeordnet sind.

3. Brennkraftmaschine nach Anspruch 1 oder 2, **dadurch gekennzeichnet,** daß die Steuerfenster (32) einen kreisförmigen oder in Umfangsrichtung des Inkreises (46) langgestreckt ovalen Umriß aufweisen.

4. Brennkraftmaschine nach einem der Ansprüche 1 bis 3, **dadurch gekennzeichnet,** daß die Brennräume (34) durch einen im wesentlichen kreiszylindrischen oder ovalzylindrischen Hohlraum mit zur Seite der benachbarten Arbeitskammern (20) vorzugsweise über die gesamte Brennraumhöhe randoffenen Mantelfläche gebildet sind.

5. Brennkraftmaschine nach Anspruch 4, **dadurch gekennzeichnet,** daß die Brennräume (34) sich über einen Bruchteil vorzugsweise von 1/4 bis 3/4 der axialen Außenrotorabmessung erstrecken.

6. Brennkraftmaschine nach einem der Ansprüche 1 bis 5, **dadurch gekennzeichnet,** daß die Gegenkolben (18) an ihren den Kolben (14) zugewandten Flanken eine sich mit dem benachbarten Brennraum (34) ergänzende randoffene Ausnehmung (48) aufweisen.

7. Brennkraftmaschine nach einem der Ansprüche 1 bis 6, **dadurch gekennzeichnet,** daß die stationären Einund/oder Auslaßöffnungen (36,40) einen in Umfangsrichtung des betreffenden Inkreises (44) langgestreckten ovalen Umriß aufweisen.

8. Brennkraftmaschine nach Anspruch 7, **dadurch gekennzeichnet,** daß die langgestreckten Auslaßöffnungen (40) in Umfangsrichtung des betreffenden Inkreises (44) unter Bildung eines Vorauslasses (42) und eines Hauptauslasses (40) in zwei gegeneinander abgedichtete und mit verschiedenen Auslaßkanälen verbundene Bereiche unterteilt sind.

9. Brennkraftmaschine nach einem der Ansprüche 1 bis 8, **dadurch gekennzeichnet,** daß im Bereich zwischen den Steuerfenstern (32) mindestens eine die radial innen und außen liegenden Dichtleisten (52,54) verbindende, im wesentlichen radial ausgerichtete Dichtleiste (56) angeordnet ist.

10. Brennkraftmaschine nach einem der Ansprüche 1 bis 9, **dadurch gekennzeichnet,** daß der Gehäusedeckel (28) aus einem Leichtmetall, vorzugsweise einer Aluminiumlegierung besteht und zumindest im Oberflächenbereich der gegen ihn anliegenden Dichtleisten eine Hartstoffbeschichtung trägt.

11. Brennkraftmaschine nach einem der Ansprüche 1 bis 10, **dadurch gekennzeichnet,** daß im Bereich zwischen einer jeden Einlaßöffnung (36) und Auslaßöffnung (40) des betreffenden Gehäusedeckels (28) eine in Richtung Rotorseitenscheibe (24) ausgerichtete Einspritzdüse (30,62) für Kraftstoff angeordnet ist.

12. Brennkraftmaschine nach Anspruch 11, **dadurch gekennzeichnet,** daß die Einspritzdüse (30) als Zapfendüse ausgebildet ist.

13. Brennkraftmaschine nach Anspruch 11, **dadurch gekennzeichnet,** daß die Einspritzdüse (30) als achsparallele oder schräg montierte Lochdüse ausgebildet ist.

14. Brennkraftmaschine nach Anspruch 11, **dadurch gekennzeichnet,** daß die Einspritzdüse als Pumpedüse (62) ausgebildet ist, die vorzugsweise über eine durch den Außenrotor angetriebene Nockenscheibe (64), einen Rollenstößel (66) und einen Kipphebel (68) angesteuert ist.

15. Brennkraftmaschine nach einem der Ansprüche 1 bis 14, **dadurch gekennzeichnet,** daß im Bereich zwischen einer jeden Einlaßöffnung (36) und Auslaßöffnung (40) des Gehäusedeckels (28) oder im Bereich der Steuerfenster (32) des Außenrotors (12) je eine Zündkerze angeordnet ist.

16. Brennkraftmaschine nach einem der Ansprüche 1 bis 15, **dadurch gekennzeichnet,** daß die Kolben (14) an ihren die Brennraummantelöffnung enthaltenden Flanken konvex und die Gegenkolben (18) entsprechend konkav gekrümmt sind.

17. Brennkraftmaschine nach einem der Ansprüche 1 bis 16, **dadurch gekennzeichnet,** daß auf der Abtriebseite des Rotorgehäuses (10) ein mit der abtriebseitigen Rotorseitenscheibe (22) gekoppeltes Triebwerk angeordnet ist.

## Claims

1. An internal combustion engine with pistons that rotate around a center axis, comprising a circular-cylindrical rotor housing (10) closed off by a housing lid (26, 28) on the drive side and on the drive opposing side, an outer rotor (12) rotating with a constant speed in the rotor housing (10) about its center axis, and carrying a rotor side disk (22, 24) on the drive side and on the drive opposing side, and an inner rotor (16) rotating with an irregular speed inside of the outer rotor (12) about the center axis, whereby the outer rotor (12) has several radially inwardly pointing pistons (14) rigidly connected with one another, and the inner rotor (16) has a corresponding number of radially outwardly pointing opposed pistons (18) rigidly connected with one another engaging between two pistons (14) of the outer rotor (12) defining thereby two working chambers (20), and whereby a combustion chamber (34) is associated with each working chamber (20), and each combustion chamber (34) communicates alternately through a control window (32) surrounded by a sealing ring (50) with stationary inlet and outlet openings (36, 40), characterized in that the stationary inlet and outlet openings (36, 40) are arranged spacially from one another on a theoretical inscribed circle (44) of one of the housing lids (28) and the control windows (32) are arranged on a theoretical inscribed circle (46) with a corresponding radius in the rotor side disk (24) facing the respective housing lid (28) while forming a gap defined by flat surfaces, that sealing bars (50, 52,. 54) are arranged on the side of the rotor side disk (24) provided with the control windows (32), which side faces the respective housing lid (28), which sealing bars surround the control windows (32), and define in the area between the control windows (32) the stationary inlet and outlet openings (36, 40) radially inwardly and outwardly, and axially bridge the gap between the rotor side disk (24) and the housing lid (28), and that the combustion chambers (34) are formed by recesses in the pistons (14) of the outer rotor (12), which recesses are axially open in direction of the control windows (32) and communicate transversely thereto with the adjacent working chambers (20).

2. The internal combustion engine according to Claim 1, characterized in that the inlet and outlet openings (36, 40) are arranged in the housing lid (28) on the drive opposing side and the control windows (32) in the rotor side disk (24) on the drive opposing side.

3. The internal combustion engine according to Claim 1 or 2, characterized in that the control windows (32) have a circular contour or an oval contour elongated in peripheral direction of the inscribed circle (46).

4. The internal combustion engine according to one of the Claims 1 to 3, characterized in that the combustion chambers (34) are formed by an essentially circular-cylinder or oval-cylinder hollow space with an outer surface open at its edge, preferably over the entire combustion chamber height, toward the side of the adjacent working chambers (20).

5. The internal combustion engine according to Claim 4, characterized in that the combustion chambers (34) extend over a fraction, preferably 1/4 to 3/4, of the axial outer rotor dimension.

6. The internal combustion engine according to one of the Claims 1 to 5, characterized in that the opposed pistons (18) have on their flanks facing the pistons (14) an edge-open recess (48) corresponding to the adjacent combustion chamber (34).

7. The internal combustion engine according to one of the Claims 1 to 6, characterized in that the stationary inlet and/or outlet openings (36, 40) have an oval contour elongated in peripheral direction of the respective theoretical inscribed circle (44).

8. The internal combustion engine according to Claim 7, characterized in that the elongated outlet openings (40) are divided in peripheral direction of the respective theoretical inscribed circle (44) while forming a preoutlet (42) and a main outlet (40) into two areas, which are sealed off against one another and are connected to the various outlet channels.

9. An internal combustion engine according to one of the Claims 1 to 8, characterized in that in the area between the control windows (32) there is arranged at least one essentially radially aligned sealing bar (56) connecting the sealing bars (52, 54) lying radially on the inside and outside.

10. An internal combustion engine according to one of the Claims 1 to 9, characterized in that the housing lid (28) consists of a light metal, preferably of an aluminum alloy, and carries a hard-material coating at least in the surface area of the sealing bars resting against said lid.

11. An internal combustion engine according to one of the Claims 1 to 10, characterized in that in the area between each one inlet opening (36) and outlet opening (40) of the respective housing lid (28) there is arranged an injection nozzle (30, 62) for fuel, which nozzle is aligned in direction of the rotor side disk (24).

12. An internal combustion engine according to Claim 11, characterized in that the injection nozzle (30) is designed as a peg-type nozzle.

13. An internal combustion engine according to Claim 11, characterized in that the injection nozzle (30) is designed as an axis-parallel or inclined mounted holetype nozzle.

14. An internal combustion engine according to Claim 11, characterized in that the injection nozzle is designed as a pump nozzle (62), which is controlled preferably through a cam plate (64) driven by the outer rotor, a roller shaft (66), and a rocker arm (68).

15. An internal combustion engine according to Claims 1 to 14, characterized in that in the area between each one inlet opening (36) and outlet opening (40) of the housing lid (28) or in the area of the control windows (32) of the outer rotor (12) there is arranged each one spark plug.

16. An internal combustion engine according to one of the Claims 1 to 15, characterized in that the pistons (14) are curved convexly at their flanks containing the combustion chamber outer surface opening and the opposed pistons (18) are curved correspondingly concavely.

17. An internal combustion engine according to one of the Claims 1 to 16, characterized in that a driving mechanism is arranged on the drive side of the rotor housing (10), which driving mechanism is coupled to the rotor side disk (22) on the drive side.

## Revendications

1. Moteur à combustion interne à pistons tournant autour d'un axe médian, comprenant un carter de rotor (10) cylindrique circulaire fermé du côté sortie et du côté opposé à la sortie par un couvercle de carter (26, 28), un rotor extérieur (12) qui tourne dans le carter de rotor (10) à une vitesse uniforme autour de l'axe médian de celui-ci et porte du côté sortie et du côté opposé à la sortie un disque latéral de rotor (22, 24), et un rotor intérieur (16) qui tourne à l'intérieur du rotor extérieur (12) à une vitesse variable autour de l'axe médian, le rotor extérieur (12) comportant plusieurs pistons (14) solidaires dirigés radialement vers l'intérieur, et le rotor intérieur (16) comportant un nombre correspondant de pistons opposés (18) solidaires dirigés radialement vers l'extérieur et s'engageant entre respectivement deux pistons (14) du rotor extérieur (12) en délimitant à chaque fois deux chambres de travail (20), à chacune des chambres de travail (20) étant associée une chambre de combustion (34), et chaque chambre de combustion (34) communiquant alternativement, par l'intermédiaire d'une fenêtre de commande (32) entourée d'une bague d'étanchéité (50), avec des orifices d'entrée et de sortie (36, 40) stationnaires, **caractérisé en ce** que les orifices d'entrée et de sortie (36, 40) stationnaires sont disposés à distances les uns des autres sur un cercle inscrit (44) d'un rayon convenable de l'un des couvercles de carter (28) et que les fenêtres de commande (32) se situent sur un cercle inscrit (46) d'un rayon convenable dans le disque latéral de rotor (24) tourné vers le couvercle de carter (28) considéré, avec formation d'une fente délimitée par des surfaces planes, que sur le côté du disque latéral de rotor (24) muni des fenêtres de commande (32), tourné vers le couvercle de carter (28) considéré, sont disposées des baguettes d'étanchéité (50, 52, 54) qui entourent les fenêtres de commande (32), délimitent dans la région entre les fenêtres de commande (32), les orifices d'entrée et de sortie (36, 40) stationnaires radialement vers l'intérieur et vers l'extérieur, et recouvrent axialement la fente entre le disque latéral de rotor (24) et le couvercle de carter (28), et que les chambres de combustion (34) sont constituées par des évidements dans les pistons (14) du rotor extérieur (12) ouverts axialement en direction des fenêtres de commande (32) et communiquant transversalement avec les chambres de travail (20) voisines.

2. Moteur à combustion interne selon la revendication 1, caractérisé en ce que les orifices d'entrée et de sortie (36, 40) sont disposés dans le couvercle de carter (28) situé du côté opposé à la sortie, et que les fenêtres de commande (32) sont disposées dans le disque latéral de rotor (24) situé du côté opposé à la sortie.

3. Moteur à combustion interne selon la revendication 1 ou 2, caractérisé en ce que les fenêtres de commande (32) présentent un contour circulaire ou un contour ovale allongé dans le sens circonférentiel du cercle inscrit (46).

4. Moteur à combustion interne selon l'une des revendications 1 à 3, caractérisé en ce que les chambres de combustion (34) sont constituées par une cavité sensiblement cylindrique circulaire ou cylindrique ovale avec une surface latérale au bord ouvert, de préférence sur toute la hauteur de la chambre de combustion, vers le côté des chambres de travail (20) voisines.

5. Moteur à combustion interne selon la revendication 4, caractérisé en ce que les chambres de combustion (34) s'étendent sur une fraction, de préférence de 1/4 à 3/4 de l'extension axiale du rotor extérieur.

6. Moteur à combustion interne selon l'une des revendications 1 à 5, caractérisé en ce que les pistons opposés (18) présentent sur leurs flancs tournés vers les pistons (14), un évidement (48) au bord ouvert qui communique avec la chambre de combustion (34) voisine.

7. Moteur à combustion interne selon l'une des revendications 1 à 6, caractérisé en ce que les orifices d'entrée et/ou de sortie (36, 40) stationnaires présentent un contour ovale allongé dans le sens circonférentiel du cercle inscrit (44) considéré.

8. Moteur à combustion interne selon la revendication 7, caractérisé en ce que les orifices de sortie (40) allongés sont subdivisés dans le sens circonférentiel du cercle inscrit (44) considéré, avec formation d'une sortie préliminaire (42) et d'une sortie principale (40), en deux zones étanches l'une par rapport à l'autre et raccordées à des canaux de sortie différents.

9. Moteur à combustion interne selon l'une des revendications 1 à 8, caractérisé en ce que dans la région entre les fenêtres de commande (32) est disposée au moins une baguette d'étanchéité (56) sensiblement radiale qui relie les baguettes d'étanchéité (52, 54) situées radialement à l'intérieur et à l'extérieur.

10. Moteur à combustion interne selon l'une des revendications 1 à 9, caractérisé en ce que le couvercle de carter (28) est réalisé en un métal léger, de préférence un alliage d'aluminium, et qu'il porte au moins dans la zone de surface des baguettes d'étanchéité appliquées contre ledit couvercle de carter, un revêtement de matériau à résistance mécanique élevée.

11. Moteur à combustion interne selon l'une des revendications 1 à 10, caractérisé en ce qu'il comporte, dans la région entre chaque orifice d'entrée (36) et chaque orifice de sortie (40) du couvercle de carter (28) considéré, un injecteur (30, 62) pour le carburant orienté en direction du disque latéral (24) du rotor.

12. Moteur à combustion interne selon la revendication 11, caractérisé en ce que l'injecteur (30) est conformé en injecteur à téton.

13. Moteur à combustion interne selon la revendication 11, caractérisé en ce que l'injecteur (30) est conformé en injecteur à trou monté parallèlement à l'axe ou en oblique.

14. Moteur à combustion interne selon la revendication 11, caractérisé en ce que l'injecteur est conformé en pompe d'injection (62) combinée avec l'injecteur qui est commandée de préférence par l'intermédiaire d'un disque à cames (64) entraîné par le rotor extérieur, d'un poussoir à galets (66) et d'un culbuteur (68).

15. Moteur à combustion interne selon l'une des revendications 1 à 14, caractérisé en ce que dans la région entre chaque orifice d'entrée (36) et chaque orifice de sortie (40) du couvercle de carter (28) ou dans la région des fenêtres de commande (32) du rotor extérieur (12) est disposée respectivement une bougie d'allumage.

16. Moteur à combustion interne selon l'une des revendications 1 à 15, caractérisé en ce que les pistons (14) présentent sur leurs flancs contenant l'ouverture de l'enveloppe de la chambre de combustion, une courbure convexe et que les pistons opposés (18) présentent une courbure concave conjuguée.

17. Moteur à combustion interne selon l'une des revendications 1 à 16, caractérisé en ce que du côté sortie du carter de rotor (10) est disposé un mécanisme d'entraînement couplé avec le disque latéral de rotor (22) situé du côté sortie.
